# EUROPÄISCHE PATENTANMELDUNG

(11) **EP 1 051 939 A2**
(43) Veröffentlichungstag der Anmeldung: **15.11.2000**
(21) Anmeldenummer: 00109605.6
(22) Anmeldetag: 05.05.2000
(51) Int. Cl.: A47J 19/02

(54) **Zitruspresse**

(30) Priorität: 08.05.1999 DE 19921410
(71) Anmelder: Diez, Stefan, 70192 Stuttgart (DE)
(72) Erfinder: Diez, Stefan, 70192 Stuttgart (DE)
(74) Vertreter: Fleck, Hermann-Josef, Dr.-Ing.

(57) **Zusammenfassung**

Die Erfindung betrifft eine Zitruspresse mit einem Auffangbehältnis und einem Dornträger, wobei der Dornträger einen Dorn zur Aufnahme halbierter Zitrusfrüchte aufweist, und wobei der Dorn um eine Dorn-Drehachse rotierbar ist. Zur Verbesserung der ergonomischen Handhabung einer solchen Zitruspresse ist es erfindungsgemäß vorgesehen, dass der Dornträger um eine Dornträger-Drehachse rotierbar ist, die zumindest im Bereich des Dornes derart beabstandet zu der Dorn-Drehachse angeordnet ist, dass der Dorn exzentrisch um die Dornträger-Drehachse rotierbar ist.

## Beschreibung

Die Erfindung betrifft eine Zitruspresse mit einem Auffangbehältnis und einem Dornträger, wobei der Dornträger einen Dorn zur Aufnahme halbierter Zitrusfrüchte aufweist, und wobei der Dorn um eine Dorn-Drehachse rotierbar ist.

Derartige Zitruspresen sind aus dem Stand der Technik vorbekannt. Die halbierten Zitrusfrüchte werden auf den Dorn aufgedrückt. Der Dorn ist elektromotorisch angetrieben. Infolge des aufgebrachten Druckes und der Dorndrehung wird die Zitrusfrucht entsaftet.

Es sind auch Zitruspressen vorbekannt, die keinen elektrischen Antrieb benötigen und daher kostengünstig hergestellt werden können. Dabei wird die halbierte Zitrusfrucht auf einen feststehenden, geriffelten Dorn aufgedrückt und gleichzeitig gedreht. Bei diesen Anordnungen muss die Kraftaufbringung in ermüdender Weise aus dem Handgelenk erfolgen. Bedingt durch diesen ergonomischen Nachteil können diese Zitruspressen nur für geringe Saftmengen eingesetzt werden.

Es ist Aufgabe der Erfindung, eine Zitruspresse der eingangs erwähnten Art zu schaffen, mit der ein manuelles Auspressen von Zitrusfrüchten ergonomisch günstig durchgeführt werden kann.

Diese Aufgabe wird dadurch gelöst, dass der Dornträger um eine Dornträger-Drehachse rotierbar ist, die zumindest im Bereich des Dornes derart beabstandet zu der Dorn-Drehachse angeordnet ist, dass der Dorn exzentrisch um die Dornträger-Drehachse rotierbar ist. Die Zitruspresse kann auf den Dorn aufgepresst und dann der Dornträger rotiert werden. Infolge der exzentrischen Anordnung führt der Dorn beim Rotieren des Dornträgers gleichzeitig eine Drehbewegung um die eigene Achse (die Dorn-Drehachse) durch. Die Drehung des Dornträgers kann ergonomisch günstig aus dem Arm heraus bewerkstelligt werden.

Um beim Pressvorgang die Kerne und das Fruchtfleisch der Zitrusfrucht abtrennen zu können, kann es vorgesehen sein, dass der Dornträger ein Sieb aufweist, das in Schwerkraftrichtung unterhalb des Dornes angeordnet ist.

Gemäß einer bevorzugten Erfindungsausgestaltung ist es vorgesehen, dass der Dornträger einen Boden aufweist, der an seinem radial außenliegenden Rand von einer umlaufenden Auffangrinne umgeben ist, dass die Auffangrinne an ihrem dem Boden abgewandten, radial außenliegenden Bereich mittels einer Außenwand abgeschlossen ist, dass in die Außenwand das Sieb bildende Durchtrittsöffnungen eingebracht sind, und dass sich die Durchtrittsöffnungen in Schwerkraftrichtung zumindest teilweise in den Bereich der Auffangrinne hinein erstrecken. Beim Pressen der Zitrusfrucht gelangt der Saft, das Fruchtfleisch und die Kerne auf den Boden. Unterstützt durch die am Rotieren des Dornträgers erzeugte Zentrifugalkraft werden die Zitrusfrucht-Bestandteile radial nach außen transportiert. Das Fruchtfleich und die Kerne sammeln sich in der Auffangrinne. Der Saft läuft über die Durchtrittsöffnungen in das Auffangbehältnis ab. Die Auffangrinne dient somit als Speicherreservoir für Fruchtfleich und Kerne.

Es ist jedoch auch denkbar, dass die Bestandteile der Zitrusfrucht gemeinsam in das Auffangbehältnis eingeleitet werden. Anschließend kann der Saft ausgegossen werden, wobei ein Sieb des Dornträgers dann wirksam wird und das Fruchtfleisch und die Kerne zurückhält.

Um ein verbessertes Abfließverhalten des Fruchtsaftes zu erhalten, kann es vorgesehen sein, dass die Oberseite des plattenförmigen Bodens des Dornträgers ausgehend von der Dornträger-Drehachse zum Bodenrand hin mit Gefällen verläuft, und dass der Dorn auf der Oberseite des Bodens an einer Halterung befestigt ist.

Eine mögliche Erfindungsausgestaltung sieht vor, dass der Dornträger einen Lageransatz aufweist, der über ein oder mehrere Lagerelemente an einer Lagergleitfläche des Auffangbehältnisses abgestützt ist. Dabei kann es insbesondere vorgesehen sein, dass die Lagergleitfläche des Auffangbehältnisses von einem Innenkonus gebildet ist, in den der Lageransatz mit seinen beiden Lagerelementen eingesetzt ist, und dass die Lagerelemente in Richtung der Dornträger-Drehachse zueinander beabstandet angeordnet sind. Bei dieser Anordnung kann der Dornträger auf einfache Weise mit dem Auffangbehältnis verbunden werden, wozu lediglich der Lageransatz in die zugeordnete Lageraufnahme des Auffangbehältnisses eingesetzt werden muss. Ebenso einfach kann durch alleiniges Abheben des Dornträgers eine Demontage erfolgen.

Eine Erfindungsvariante kann dadurch gekennzeichnet sein, dass das Auffangbehältnis einen Auffangraum aufweist, der von einer Außenwand, einer Innenwand und einem ringförmig umlaufenden Boden begrenzt ist, und dass der Dornträger zentrisch im Auffangbehältnis gelagert ist.

Der Innenkonus, der die Lagergleitfläche bildet, kann dabei über einen gewölbten Übergangsabschnitt an die Innenwand des Auffangbehältnisses einstückig angeformt sein. Hierdurch wird der Teileaufwand reduziert. Der gewölbte Übergangsabschnitt ermöglicht eine einfache Reinigung des Auffangbehältnisses sowohl von der Behälterinnen- als auch außenseite.

Damit verhindert ist, dass das Auffangbehältnis beim Drehen des Dornträgers auf der Standfläche Versatzbewegungen durchführt, kann es vorgesehen sein, dass das Auffangbehältnis bodenseitig einen umlaufenden Wulst aufweist, an den ein ebenfalls umlaufender, schnurartiger Stellfuß verspannt gehalten ist. Der Stellfuß kann als Gummischnur ausgebildet sein, die zu Reinigungszwecken auswechselbar ist.

Eine mögliche weitere Erfindungsvariante ist dadurch gekennzeichnet, dass die Dornträger-Drehachse im Winkel zu der Dorn-Drehachse steht, dass der Dorn exzentrisch zu der Dornträger-Drehachse angeordnet ist, dass der Dornträger mit einem Lagerelemente an einem Gegenlager des Auffangehältnisses abgestützt ist, und dass der Dornträger im Bereich zwischen dem Dorn und dem Lagerelement einen Wälzkörper aufweist, der auf einer Abwälzfläche abrollt. Das Gegenlager kann beispielsweise im Bodenbereich des Auffangbehältnisses angeordnet sein oder durch den Boden selbst gebildet werden. Beim Rotieren des Dornträgers führt der Dorn selbst wieder eine Drehbewegung aus, die zur Fruchtauspressung genutzt werden kann.

Der Wälzkörper kann eine Zahnung aufweisen, die mit einer Gegenzahnung der Abwalzfläche zusammenarbeitet. Hierdurch wird ein Schlupf zwischen der Abwälzfläche und dem Wälzkörper verhindert. Die Gegenzahnung kann Teil des Auffangbehältnisses oder Teil eines mit dem Auffangbehältnis verbundenen Aufsatzes sein.

Die Erfindung wird im Folgenden anhand von in den Zeichnungen dargestellten Ausführungsbeispielen näher erläutert. Es zeigen:
- Fig. 1: in Seitenansicht eine Zitruspresse längs dem in Fig. 2 mit I-I gekennzeichnten Schnittverlaufes,
- Fig. 2: die Zitruspresse gemäß Fig. 1 in Draufsicht,
- Fig. 3: eine Ausgestaltungsvariante einer Zitruspresse in Seitenansicht und im Vertikalschnitt und
- Fig. 4: eine weitere Ausgestaltungsvariante einer Zitruspresse in Seitenansicht und im Vertikalschnitt.

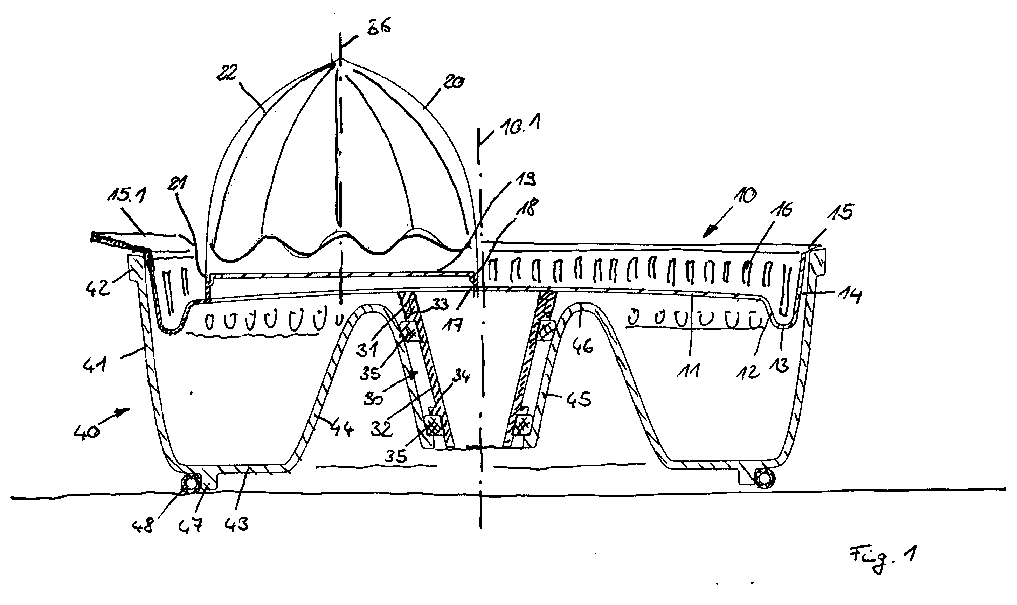

In der Fig. 1 ist eine Zitruspresse dargestellt, die ein Auffangbehältnis 40 aufweist. Das Auffangbehältnis 40 ist als Glasschale ausgebildet. Es weist einen Auffangraum auf, der von einer Außenwand 41, einem Boden 43 und einer Innenwand 44 begrenzt wird. Der Auffangraum ist ringförmig ausgebildet. Die Außenwand 41 schließt an ihrem freien Ende mit einem verdickten Rand 42 ab Die Innenwand 44 geht über einen gewölbten Übergangsabschnitt 46 in ein konisches Lagerteil einstückig über. Das Lagerteil bildet eine Lagergleitfläche 45. In das konische Lagerteil des Auffangbehältnisses 40 ist ein Lageransatz 30 eines Dornträgers 10 eingesetzt. Der Lageransatz 30 ist als konische Hohl-Hülse ausgebildet. An seinem Außenumfang besitzt der Lageransatz 30 einen oberen Bund 31. Mittels dieses Bundes 31 ist der Lageransatz 30 an die Unterseite eines plattenförmigen Bodens 11 des Dornträgers 10 angeschweißt. Der Bund 31 bildet eine Schulter 33 für ein oberes Lagerelement 35. In Achsrichtung des Lageransatzes 30 beabstandet zu der oberen Schulter 33 besitzt der Lageransatz 30 eine weitere Schulter 34. An der Schulter 34 schlägt ein unteres Lagerelement 35 an. Die Lagerelemente 35 können als Teflonringe ausgebildet sein. An ihren Außenkonturen liegen die Lagerelemente 35 an der Lagergleitfläche 45 des Auffangbehältnisses 40 an. Die Materialpaarung Lagergleitfläche 45 - Lagerelement 35 ist so gewählt, dass ein geringer Reibkoeffizient vorliegt. Wie sich aus der Fig. 1 entnehmen lässt, ist der Lageransatz 30 rotationssymmetrisch zu einer aufrechten Dorn-Drehachse 10.1 ausgebildet.

Der Boden 11 des Dornträgers 10 ist ausgehend von der Dornträger-Drehachse 10.1 mit Gefälle zum radial außenliegenden Bodenrand hin verlegt. Außenseitig schließt sich einstückig an den Boden 11 über eine Wandung 12 eine Auffangrinne 13 an. Die Auffangrinne 13 wird von der Wandung 12 und einer Außenwand 14 begrenzt. Die Außenwand 14 ist über die Oberseite des Bodens 11 hochgezogen und schließt mit einem auswärtsgerichteten Spritzschutz 15 ab. Der Spritzschutz 15 steht in geringem Abstand über den Rand 42 des Auffangbehältnisses 30 vor. Die Außenwand 14 ist mit schlitzförmigen Durchbrechungen versehen, die ein Sieb 16 bilden. Die Durchbrechungen erstrecken sich bis in den Bereich der Auffangrinne 13 hinein.

Exzentrisch zu der Dornträger-Drehachse 10.1 ist auf dem Boden 11 ein Dorn 20 befestigt. Hierzu weist der Boden 11 eine Halterung 17 auf. Die Halterung 17 ist einstückig an dem Boden 11 angeformt. Dementsprechend kann der Dornträger 10 beispielsweise als Tiefziehteil oder als Kunststoff-Spritzgussteil ausgebildet sein. Die Halterung weist einen umlaufenden Zentrierbund 18 auf, der mit einer horizontalen Plane 19 abgeschlossen ist. Der Dorn 20 kann derart auf die Halterung 17 aufgesetzt werden, dass sich der untere Rand 21 des Domes 20 an dem Zentrierbund 18 ausrichtet. Der Dorn 20 kann mit der Halterung 17 verschweißt sein.

Die Außenfläche des Dornes 20 wird von einer Riffelung 22 gebildet, die letztendlich als Auflagefläche für eine Zitrusfrucht-Hälfte dient. Der Dornträger 10 kann unter Aufbringung einer leichten Druckkraft auf die Zitrusfrucht-Hälfte um die Dornträger-Drehachse 10.1 rotiert werden. Infolge der exzentrischen Anordnung des Dornträgers 10 dreht sich dabei auch der Dorn 20 um eine Dorn-Drehachse 36. Infolge dieser Drehbewegung wird die Zitrusfrucht-Hälfte entsaftet. Der Saft, das Fruchfleisch und die Kerne fließen in Schwerkraftrichtung ab und gelangen auf den Boden 11. Unterstützt durch die Zentrifugalkraft und die geneigten Anordnung des Bodens 11 fließen die Zitrusfrucht-Bestandteile radial nach außen ab und werden im Bereich der Auffangrinne 13 aufgefangen. Der Saft fließt über die Durchtrittsöffnungen des Siebes 16 in das Auffangbehältnis 40 ab. Fruchtfleisch und Kerne verbleiben in der Auffangrinne. Nachdem der Pressvorgang abgeschlossen wurde, kann der Dornträger 10 mittels eines Griffes 15.1 aus dem Auffangbehältnis 40 ausgehoben werden. Anschließend lässt sich das Auffangbehältnis 40 greifen und der Saft ausschütten. Das Halten des Auffangbehältnisses 40 während des Schüttvorganges wird durch eine Griffanordnung unterstützt, die von der Außenwand 41, der Innenwand 44 und dem Boden 43 gebildet wird. Ein Benutzer kann außenseitig die Hand um die durch diese Bauteile gebildete Kontur legen.

Damit beim Pressvorgang kein Versatz der Zitruspresse auf der Auflagefläche stattfindet, ist ein Stellfuss 48 verwendet. Der Stellfuss 48 ist als Gummischur ausgebildet. Diese Gummischnur verspannt sich an einem Wulst 47, der einstückig an den Boden 43 angeformt und umlaufend ausgebildet ist.

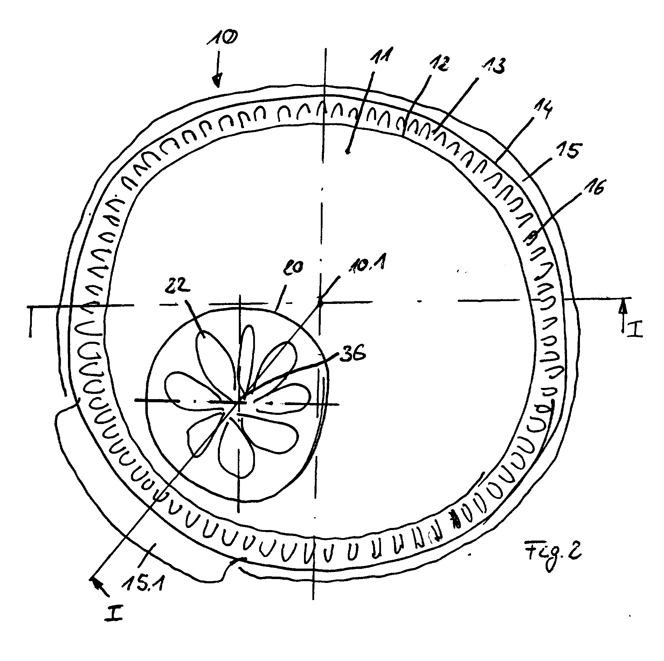

Wie der Fig. 2 entnommen werden kann, ist die Platte 19 als kreisrunde Scheibe ausgebildet, die ringförmig von dem Sieb 16 umgeben ist. Der Griff 15.1 erstreckt sich nur über einen Teilbereich des Dornträger-Umfanges.

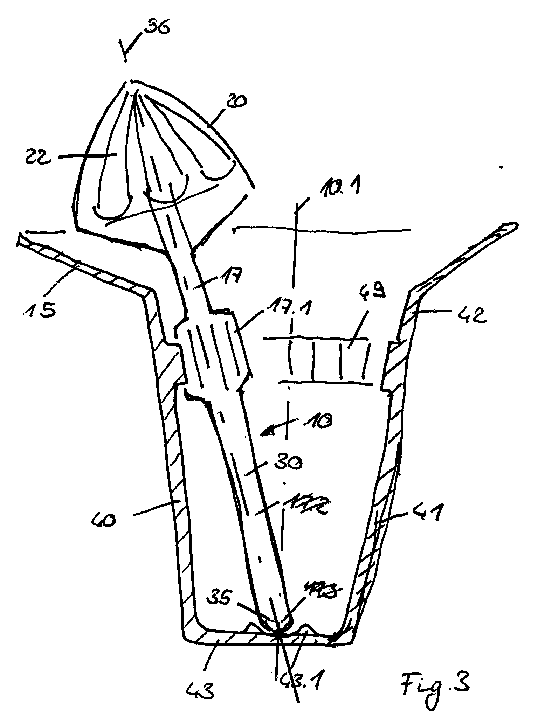

In der Fig. 3 ist eine weitere Ausgestaltungsvariante einer erfindungsgemäßen Zitruspresse dargestellt. Der Dornträger 10 ist dabei im Wesentlichen als stabförmiges Element ausgebildet. Das eine Dornträgerende ist dabei als Lagerelement 35 ausgebildet. Dieses stützt sich an einem Gegenlager 43.1 ab, das im Bereich des Bodens 43 des Auffangbehältnisses 40 in Form einer Mulde eingebracht ist. An dem, dem Lagerelement 35 abgewandten Ende trägt der Dornträger 30 den Dorn 20. Der Dorn 20 kann dabei einstückig an den Dornträger 30 angeformt sein. Im Bereich zwischen dem Lagerelement 35 und dem Dorn 20 weist der Dornträger 30 einen Wälzkörper 17.1 auf, der auf seiner Außenkontur mit einer Zahnung versehen ist. Die Zahnung kämmt mit einer Gegenzahnung, die in eine Abwälzfläche 49 eingearbeitet ist. Die Abwälzfläche 49 ist dabei Teil des Auffangbehältnisses 40. Das Auffangbehältnis 40 kann wiederum aus Glas oder auch aus Metall gefertigt sein. Im Anschluss an den oberen Rand 42 des Auffangbehältnisses 40 ist einstückig ein nach außen gerichteter Spritzschutz 15 angeformt.

Auf die Riffelung 22 des Dornes 20 kann eine Zitrusfrucht-Hälfte aufgepresst werden. Der Dornträger 10 lässt sich dann um die Dornträger-Drehachse 10.1 rotieren, wobei der Wälzkörper 17.1 auf der Abwälzfläche 40 abläuft. Der Dorn 20 führt eine exzentrische Bewegung um die Dornträger 10.1 durch. Gleichzeitig dreht sich der Dornträger 10 um die Dorn-Drehachse 36. Der ausgepresste Saft, das Fruchtfleisch und die Kerne tropfen auf den Spritzschutz 15 und laufen von dort in das Auffangbehältnis 40 ab.

Es ist auch denkbar, anstatt dem Gegenlager 43.1 den Boden 43 des Auffangbehältnisses 40 selbst als Gegenlager zu verwenden. Dementsprechend würde dann das Lagerelement 35 des Dornträgers 10 im Winkelbereich zwischen dem Boden 43 und der Außenwand 41 des Auffangbehältnisses 40 angeordnet sein. Bei einer Drehung des Dornträgers 10 läuft das Lagerelement 35 dann entlang dieses Winkelbereiches.

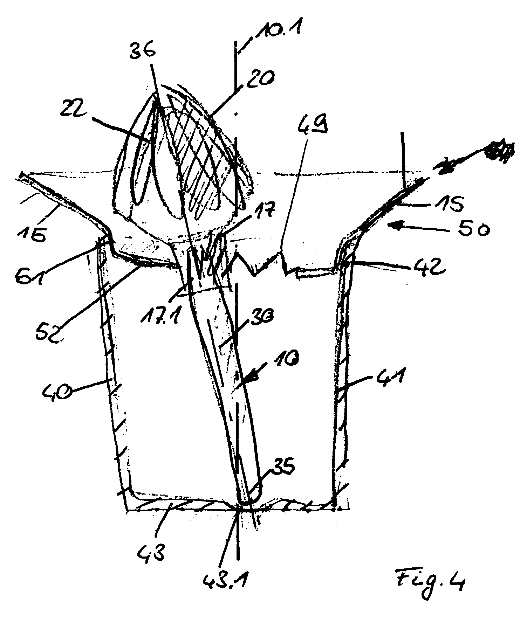

In der Fig. 4 ist eine Ausgestaltungsvariante zu der in Fig. 3 dargestellten Zitruspresse veranschaulicht. Entgegen der Ausgestaltung gemäß Fig. 3 weist diese Zitruspresse einen Aufsatz 50 auf, der sich mit einem Vorsprung 51 an dem oberen Rand 42 des Auffangbehältnisses 40 abstützt. Der Vorsprung 51 geht in einen einwärts gezogenen Boden 52 über. Der Boden 52 bildet die Abwälzfläche 49, die vorliegend ebenfalls gezahnt ausgebildet ist. Der Wälzkörper 17.1 mit seiner Außenzahnung läuft aus dieser Abwälzfläche beim Drehen des Dornträgers 10 ab. Die Funtkionsweise der in Fig. 4 gezeigten Zitruspresse ist im Wesentlichen identisch zu der gemäß Fig. 3. Ebenso kann der Dornträger 10 mit seinem Lagerelement 35 auch im Winkelbereich zwischen Boden 43 und Außenwand 41 des Auffangbehältnisses 40 abgestützt sein. Dann lässt sich insbesondere auch ein handelsübliches Becherglas verwenden, das alleine mit dem Aufsatz 50 und dem Dornträger 10 zu einer Zitruspresse umfunktioniert werden kann.

Wie die Fig. 3 und 4 erkennen lassen, ist die Dorn-Drehachse 36 im Winkel zu der Dornträger-Drehachse 10.1 angeordnet. Die Achsen können sich insbesondere schneiden oder auch zueinander windschief angestellt sein.

## Patentansprüche

1. Zitruspresse mit einem Auffangbehältnis (40) und einem Dornträger (10), wobei der Dornträger (10) einen Dorn (20) zur Aufnahme halbierter Zitrusfrüchte aufweist, und wobei der Dorn (20) um eine Dorn-Drehachse (36) rotierbar ist,
dadurch gekennzeichnet,
dass der Dornträger (10) um eine Dornträger-Drehachse (10.1) rotierbar ist, die zumindest im Bereich des Dornes (20) derart beabstandet zu der Dorn-Drehachse (36) angeordnet ist, dass der Dorn (20) exzentrisch um die Dornträger-Drehachse (10.1) rotierbar ist.

2. Zitruspresse nach Anspruch 1,
dadurch gekennzeichnet,
dass der Dornträger (10) ein Sieb (16) aufweist, das in Schwerkraftrichtung unterhalb des Dornes (20) angeordnet ist.

3. Zitruspresse nach Anspruch 2,
dadurch gekennzeichnet,
dass der Dornträger (10) einen Boden (11) aufweist, der an seinem radial außen liegenden Rand von einer umlaufenden Auffangrinne (13) umgeben ist,
dass die Auffangrinne (13) an ihrem dem Boden (11) abgewandten, radial außenliegenden Bereich mittels einer Außenwand (14) abgeschlossen ist,
dass in die Außenwand (14) das Sieb (16) bildende Durchtrittsöffnungen eingebracht sind, und
dass sich die Durchtrittsöffnungen in Schwerkraftrichtung zumindest teilweise in den Bereich der Auffangrinne (13) hinein erstrecken.

4. Zitruspresse nach einem der Ansprüche 1 bis 3,
dadurch gekennzeichnet,
dass die Oberseite des plattenförmigen Bodens (11) des Dornträgers (10) ausgehend von der Dornträger-Drehachse (10.1) zum Bodenrand hin mit Gefällen verläuft, und
dass der Dorn auf der Oberseite des Bodens (11) an einer Halterung (17) befestigt ist.

5. Zitruspresse nach einem der Ansprüche 1 bis 4,
dadurch gekennzeichnet,
dass der Dornträger (10) einen Lageransatz (30) aufweist, der über ein oder mehrere Lagerelemente (35) an einer Lagergleitfläche (45) des Auffangbehältnisses (40) abgestützt ist.

6. Zitruspresse nach Anspruch 5,
dadurch gekennzeichnet,
dass die Lagergleitfläche (45) des Auffangbehältnisses (40) von einem Innenkonus gebildet ist, in den der Lageransatz (30) mit seinen beiden Lagerelementen (35) eingesetzt ist, und
dass die Lagerelemente (35) in Richtung der Dornträger-Drehachse (10.1) zueinander beabstandet angeordnet sind.

7. Zitruspresse nach einem der Ansprüche 1 bis 6,
dadurch gekennzeichnet,
dass das Auffangbehältnis (40) einen Auffangraum aufweist, der von einer Außenwand (41), einer Innenwand (44) und einem ringförmig umlaufenden Boden (11) begrenzt ist, und
dass der Dornträger (10) zentrisch im Auffangbehältnis (40) gelagert ist.

8. Zitruspresse nach einem der Ansprüche 6 oder 7,
dadurch gekennzeichnet,
dass der Innenkonus, der die Lagergleitfläche (45) bildet, über einen gewölbten Übergangsabschnitt (46) an die Innenwand (44) des Auffangbehältnisses (40) einstückig angeformt ist.

9. Zitruspresse nach einem der Ansprüche 1 bis 8,
dadurch gekennzeichnet,
dass das Auffangbehältnis (40) bodenseitig einen umlaufenden Wulst aufweist, an den ein ebenfalls umlaufender schnurartiger Stellfuß (48) verspannt gehalten ist.

10. Zitruspresse nach einem der vorhergehenden Ansprüche,
dadurch gekennzeichnet,
dass die Dornträger-Drehachse (10.1) im Winkel zu der Dorn-Drehachse (36) steht,
dass der Dorn (20) exzentrisch zu der Dornträger-Drehachse (10.1) angeordnet ist,
dass der Dornträger (10) mit einem Lagerelemente (35) an einem Gegenlager (43.1) des Auffangehältnisses (40) abgestützt ist, und
dass der Dornträger (10) im Bereich zwischen dem Dorn und dem Lagerelement (35) einen Wälzkörper (17.1) aufweist, der auf einer Abwälzfläche (49) abrollt.

11. Zitruspresse nach Anspruch 10,
dadurch gekennzeichnet,
dass der Wälzkörper (17.1) eine Zahnung aufweist, die mit einer Gegenzahnung der Abwalzfläche (49) zusammenarbeitet.

12. Zitruspresse nach Anspruch 11,
dadurch gekennzeichnet,
dass die Gegenzahnung Teil des Auffangbehältnisses (40) ist, oder
dass sie Teil eines mit dem Auffangbehälter (40) verbindbaren Aufsatzes (50) ist.
